# EUROPEAN PATENT SPECIFICATION

(11) **EP 2 547 521 B1**
(45) Date of publication and mention of the grant of the patent: **08.03.2017**
(21) Application number: 11755778.5
(22) Date of filing: 18.03.2011
(51) Int. Cl.: B32B 29/02, B32B 5/26, B32B 27/10, D01D 5/00, D21H 19/10

(54) **METHOD FOR PROVIDING A SUBSTRATE WITH A BARRIER AND A SUBSTRATE COMPRISING A BARRIER**
VERFAHREN ZUR BEREITSTELLUNG EINES SUBSTRATS MIT EINER BARRIERE UND SUBSTRAT MIT EINER BARRIERE
PROCÉDÉ POUR DOTER UN SUBSTRAT D'UNE BARRIÈRE ET SUBSTRAT COMPRENANT UNE BARRIÈRE

(30) Priority: 18.03.2010 SE 1050251
(43) Date of publication of application: 23.01.2013
(73) Proprietor: Stora Enso Oyj, 00101 Helsinki (FI)
(72) Inventor: HEISKANEN, Isto, FI-55100 Imatra (FI); BACKFOLK, Kaj, FI-53130 Lappeenranta (FI)
(74) Representative: Lindberg, Berndt Åke
(86) International application number: PCT/IB2011/051138
(87) International publication number: WO 2011/114311

(56) References cited:
- WO-A1-2009/091406
- WO-A2-2008/150970
- US-A1- 2005 070 866
- US-A1- 2007 264 520

## Description

### Field of the invention

The invention relates to a method for providing a surface of a substrate with a barrier layer by the use of electrospinning or meltspinning. It further relates to a substrate comprising a barrier layer.

### Background of the invention

The market growth for plastic packages is steadily increasing. Future predictions indicate that this trend will remain and the growth in plastic packages partly is based on capturing market shares from fiber based packages. Fiber based packages can compete with plastic packages only if material and production costs can be reduced. One of the critical properties of fiber based packages is the barrier layer or layers, their functionality and the cost efficiency during production of barrier layers. Depending on the application, the barrier will be developed so it can provide the package with one or several barrier functionalities. Fiber based packages often requires a barrier layer in order to provide resistance towards penetration or diffusion of water or humidity, oil/fat/grease, aroma and/or gases.

Traditional barrier coating methods for paper and board products have been coating, impregnation, lamination or extrusion.

One of the barrier coating methods which has been under intensive research and development during recent years is dispersion barrier coating. By applying a dispersion or emulsion of polymer with blade or curtain coating technology, it is possible to offer a technology which would replace extrusion coating. The advantages with the dispersion barrier coating technology are that it offers a possibility for online coating of paper or board at the same time as it is possible to disintegrate the barrier coated paper or board which makes it easier to recycle the used fiber based substrate.

However, creating a single barrier layer by using dispersion coating might make it difficult to achieve all required properties for the package or product thereof. Typically, hot sealability and good barrier properties are difficult to obtain simultaneously for these kinds of manufactured barriers.

Another disadvantage with production of barrier by using dispersion coating is that the stability of the dispersion must be good in order to ensure good runnability. In order to achieve good stability of a dispersion it is necessary to add stabilizing components. However, by incorporating multiple components, the barrier dispersion preparation will be more difficult.

Another characteristic of the dispersion barrier is that at the formation of the barrier a substantial amount of water is applied to the substrate. This water needs to be evaporated off and high drying energy is therefore required in order to ensure a dry barrier and complete film forming of the barrier layer. Normally, the temperature of the dry coating must be significantly higher than the glass transition temperature of the polymer in order to ensure that film formation progresses. However, the use of high drying temperatures might also cause problems with blistering or adhesion between the barrier layer and the base substrate. Another problem with high drying temperature is that the tackiness of the polymer film increases due to that the temperature often will be above the glass transition temperature.

Yet another problem with traditional dispersion barrier coating is that the viscosity is relatively low (and also the solid content) which cause high level of penetration into the base substrate. This means that not only higher amount of coating is required to ensure pinhole free coating and good barrier properties, but also the fact that high drying energy is required. For uncoated board, typically 15-25g/m2 of dry coating is required in order to get a pinhole free surface of the barrier layer.

There is thus a need for an improved method for producing paper or board with a single or multiple barrier layers in a cost efficient way.

### Summary of the invention

One object of the present invention is to provide a surface of a fiber based substrate with a barrier layer in an improved way.

Another object of the present invention is to provide a method for addition of a thin barrier layer on a surface of a fiber based substrate.

Yet another object of the present invention is a fiber based substrate with improved barrier properties.

The above-mentioned objects, as well as other advantages, are attained by the method and the substrate according to the invention.

The invention relates to a method for providing a surface of a fiber based substrate with a barrier layer wherein the barrier layer is formed by depositing nanofibers on the surface by the use of electrospinning or meltspinning.

The barrier layer is formed as a film on the surface of the fiber based substrate.

The film is formed by post treating the substrate after depositing the nanofibers on the surface. It is preferred that said post treatment is done by increasing the temperature of the deposited nanofibers so that a film is formed. It is preferred that the temperature is increased to or above the glass transition temperature or the melting temperature of the deposited nanofibers so that a film is formed.

It is possible that at least two components are spun and deposited simultaneously to the surface of the substrate. The simultaneously spinning of different components may be done through different nozzles or other feeding arrangements, so that one component is spun through one nozzle and another component through another. In this way the barrier layer will comprise a mixture of different nanofibers making it possible to provide a single barrier layer with different properties, i.e. making a kind of composite material.

The barrier layer may comprise more than one layer, i.e. at least two layers. It is thus possible to provide the different layers with different properties.

It is preferred that the barrier layer has a dry weight of 0.1-20 g/m2, preferably 0.1-5g/m2 or even more preferably 0.2-3 g/m2. It is possible to form a continuous pinhole free film on a porous surface with low amounts of deposited nanofibers.

The fiber based substrate may be provided with a coating layer to which the nanofibers are deposited. In this way a smoother surface is provided making it possible to reduce the amount of deposited fibers even further.

The barrier layer of the substrate may be provided with a coating layer. It is preferred that the coating layer comprises a polymer that is laminated or extrusion coated to the barrier layer.

The nanofibers are formed by electrospinning or meltspinning of a polymer, such as polyvinyl alcohol, varnish, polystyrene, polybutadiene, polyurethanes, polyethylene dispersions, polypropylene, PLA, chitosan, starch, sodium carboxymethyl cellulose, acrylate copolymers, polyvinyl acetate, poly ethylene oxide, polyethylene dispersions, polyethylene terephthalate dispersions, mixtures or its modified analogues of any of the mentioned components.

The electrospinning may be done with a liquid or dispersion comprising at least one polymer. It is also possible to use a solid polymer or a wax as a starting material which is melted, i.e. meltspinning.

The barrier layer may further be provided with functional properties by addition of a functional additive to the barrier. The functional additive may be spun together with the polymer. It is also possible that the functional additive is spun separately to form a separate layer of the barrier layers.

The invention further relates to a fiber based substrate which comprises a fiber base layer and a barrier layer wherein the barrier layer is formed by electrospun or meltspun nanofibers on the surface of the fiber base layer.
The barrier layer is a film formed by the deposited nanofibers.

The film may be formed by melted nanofibers, i.e. the deposited nanofibers may be melted to form said film. The film may also be formed by increasing the temperature of the nanofibers to or above the glass transition temperature whereby the fibers "flow" and a film will is formed. It is possible that the film is continuous, i.e. it completely covers the surface of the fiber base substrate and there are no pin-holes etc which makes it possible for components to reach the fiber base surface of the substrate.

The film may also be discontinuous. In some field of uses it is not necessary to completely cover the entire surface of the fiber base surface in order to achieve sufficient protection.

The barrier may be a barrier against liquid, vapour, oil, aroma, fat, grease, oil, solvents, heat, uv-light and/or gas.

If the film is discontinuous, the barrier may be a barrier against oil, grease and/or fat. It has been shown that sufficient barrier properties against oil, grease and/or fat may be achieved even though the film which forms the barrier is discontinuous, i.e. it comprises nanoholes or similar irregularities. This is due to that the contact angle between the film and the oil, grease and/or fat is big enough so that the oil will not penetrate through the barrier layer. This can be used for short time barrier properties, e.g. temporarily fat/grease barrier.

The barrier layer may comprise nanofibers of at least two components. By simultaneously spinning of different components, preferably through different nozzles or other feeding arrangements, it is possible to produce a barrier layer that comprises at least two components. In this way the barrier layer may have different properties since one component can give barrier properties against one compound, such as water and another component can give barrier properties against another compound, such as grease, In this way it is also possible to spin one component which will melt in order to form a film and one component which will support the melted component and prevent it to penetrate too deep into the base material, i.e. keep them on the surface of the fiber based substrate. It is thus possible that a single barrier layer comprises protection against several different compounds.

The barrier layer may comprise at least two layers. It is possible that the barrier layer comprises two or more layers. Each layer may have different properties, for example one layer may provide the substrate with barrier properties against vapour and a second layer may provide the barrier with heat-sealing properties.

The fiber base layer may be coated with any conventional coating before the deposition of nanofibers on the surface. Thus, the barrier layer is formed on the coated surface of the fiber based layer. In this way the barrier layer is formed on a smooth surface which makes it possible to reduce the amount of deposited nanofibers even further.

The barrier layer of the fiber based substrate may also be coated.

### Detailed description of the invention

The present invention relates to a method for providing a surface of a fiber based substrate with a barrier layer wherein the barrier layer is formed by depositing nanofibers on the surface by the use of electrospinning or meltspinning.

It has been found that by depositing nanofibers on a surface of a fiber based substrate by the use of electrospinning or meltspinning it is possible to form a thin layer of nanofibers which will form a barrier layer on the surface. It has surprisingly been found that a thin layer of deposited nanofibers are sufficient in order to completely cover a rough surface, such as a surface of a fiber based substrate. Furthermore, due to the characteristic fiber dimension and fiber properties of the nanofibers produced and deposited by electrospinning or meltspinning, the penetration of the nanofibers into the substrate is insignificant. The nanofibers will thus be deposited on the surface and stay on the surface of the substrate. They will still bond in a satisfactory way to the surface of the substrate due to chemical and/or physico-chemical interactions between the fibers of the substrate and the deposited nanofibers. There might also be some interdiffusion which can create mechanical or physical interlocking of the fibers. The deposited nanofibers will either coalesced or melt on the surface of the substrate to form a film which will work as the barrier. By depositing fibers on the surface before having a complete film a substantially lower amount of coating is needed, this is due to the fact that the penetration into the substrate is much lower or even insignificant compared to other barriers formed on fiber based substrates created with other coating techniques. Consequently, the film formation according to the invention is formed from a fiber network which should be compared to prior art solutions where films are formed from a solution or a dispersion.

The amount of fibers added to the surface of the fiber based substrate depends on different parameters, for example on the roughness of the surface, It is preferred that the barrier layer has a dry weight of 0.1-20 g/m², preferably 0.1-5g/m² or even more preferably 0.2-3 g/m². If the surface to which the barrier layer is added is rough a higher amount of fibers need to be added and it is the preferred that the dry weight of the barrier layer is between 2-20 g/m2.

By optimizing the spinning conditions it is possible to increase the moisture during the spinning so that the deposited fibers are coalesced into a film. The first deposited fibers will be dry or they will have a high solid content which makes the rheology of the fibers high. This is partly due to that the surface to which they are deposited on is dry. The spinning conditions will thereafter change so that the following deposited fibers are wetter, i.e. semidry, This results in that the fibers are coalesced to a film which will work as an excellent barrier. The dryness and/or solids of the liquid or air used during the electrospinning or meltspinning can be controlled so that the fibers will coalesced to a film. It is also possible to control the moisture, temperature, production rate and spinning distance so that the fibers will form a film. In this way it is possible to produce a fiber based substrate in a very easy way.

It is also possible to post treat the substrate or the surface of the substrate together with the deposited nanofibers in order for the nanofibers to form a film. It is preferred to use a heat treatment which will increase the temperature of the deposited nanofibers so that the properties of the deposited nanofibers changes whereby a film is formed. It is preferred to increase the temperature to or above the glass transition temperature or the melting temperature of the nanofibers. In this way the properties of the deposited nanofibers will change, e.g. they will start to "flow" or melt, and they will thus form a film which will work as a barrier layer of the fiber based substrate. Depending on the material used for the production of nanofibers and on the time of the treatment, it may not be necessary to increase the temperature to or above the glass transition temperature. For some materials it may be sufficient to increase the temperature some, still being below the glass transition temperature, in order for the properties of the deposited nanofibers to change and form a film. The heating can be done by the use of flame, infra-red dryer, fuser roll, air-dryer, plasma, steam, laser UV, EB or any other known technique. It is also possible to use hot fusing or hot nip in which the deposited fibers are heated and simultaneously formed to a thin film on the substrate. It is also possible post treat the deposited nanofibers by increasing the pressure, preferably in combination with increased temperature. Another possible post treatment is subjecting the nanofibers to an electric field. Other possible post treatments may be radiation curing, e.g. IR, NIR etc. If the deposited fibers are hot it is also possible to cool them and thus form a film by decreasing the temperature.

The substance or substances to be formed into nanofibers by the use of electraspinning or meltspinning may be polymers or a blend of polymers. Suitable polymers may be chosen from e.g. polyolefins, polyvinyls, polyamides, polyimides, polyacrylates, polyesters, and mixtures thereof. It is especially preferred to use polyvinyl alcohol, varnish, polystyrene, polybutadiene, polyurethanes, polyethylene dispersions, polypropylene, PLA, chitosan, starch, sodium carboxymethyl cellulose, acrylate copolymers, polyvinyl acetate, poly ethylene oxide, polyethylene dispersions, polyethylene terephthalate dispersions, mixtures or its modified analogues of any of the mentioned components. The polymer used depends on the end use of the fiber based substrate. The different polymers will form a barrier layer against different properties, for example will PVA form a barrier layer against grease.

The present invention makes it possible to provide a barrier layer comprising at least two components. This can be done by simultaneously spin two or more components which thus will be deposited on the surface of the substrate. The simultaneously spinning of two or more components may be done through different nozzles or other feeding arrangements, so that one component is spun through one nozzle and another component through another. In this way the barrier layer will comprise a mixture of different nanofibers making it possible to provide a single barrier layer with different properties, i.e. making a kind of composite material. For example may one component give barrier properties against one compound, such as water and another component can give barrier properties against another compound, such as grease. In this way it is also possible to spin one component which will melt in order to form a film and one component which will support the melted component and prevent it to penetrate too deep into the base material, i.e. keep them on the surface of the fiber based substrate. It is thus possible that a single barrier layer comprises protection against several different compounds.

A big advantage with the present invention is that it is possible to provide the barrier layer with more than one layer in an easy way. It is thus possible to produce a barrier layer which fulfils different properties which previously has demanded several process steps. In this way it is possible to provide the barrier layer with several layers with different properties, for example one prime layer, a barrier layer, a protective layer, a hot sealable layer and/or a blocking resistant layer. The use of different polymer dispersions gives different properties. For example, a polyurethane dispersion will give a barrier against aroma, fat and grease as well as sealability properties. A fiber based substrate with a polyurethane barrier will thus be easy to seal in order to form a package at the same time as it has great barrier properties. If the polyurethane barrier layer is combined with an ethylene layer the fiber bases substrate will also have a barrier against water.

The surface of the fiber based substrate may be provided with a coating layer. Consequently, the nanofibers will be deposited on the coating layer of the fiber based substrate. In this way the deposition of the coating layer is done on a smooth surface and the amount of nanofibers may be even further reduced, The coating can be of any conventional coating colour, such as calcium carbonate or kaolin.

The barrier layer of the substrate may be provided with a coating layer. It is preferred that the coating layer comprises a polymer that is laminated or extrusion coated to the barrier layer. In this way the barrier layer may comprise a primer which will increase the adhesion between the fiber based substrate and an extrusion coated layer making it possible to increase the speed of the extrusion coating process. The coating layer may also comprise any conventional coating components, both polymer layer as well as pigment coating layer.

It is also possible to provide the barrier layer with functional properties by the addition of a functional additive to the medium which is spun. Possible additives may be fillers which may increase whiteness or provide the substrate with UV protection or absorbents which may trap taste and odor chemicals and thus reduce problems. The functional additive may be mixed with the medium, preferable a polymer dispersions, and thus be spun together with the polymer. The nanofibers formed will thus comprise a mixture of polymer nanofibers and nanofibers from the additive. It is also possible to incorporate an additive to the formed nanofibers. Yet another possibility is to spin the functional additive simultaneously with a polymer, as described above.

It is also possible to use a solid medium, such as a solid polymer or a wax, as a starting medium of the nanofiber forming process. This is normally called meltopinning. A big advantage with this method is that no water or liquid is added to the surface of the substrate and there is thus no need to evaporate the added water off by increased drying. It is thus possible to decrease the amount of drying, saving both energy and time,

The fiber based substrate is preferably a paper or board produced from lignocelluloses. Other fiber based substrate such as non-woven, or textiles may also be used.

The formation of particles is carried out by electrospinning or moltspinning, whereby ultrafine fibers are formed. The diameter of single fibers may, e.g., be less than 5 µm or even less than 40 nm. The term electrospinning or meltspinning relates to generation of fibers in the nanosize region due to viscoelastic and electrostatic forces. The medium from which the fibers are formed may be a foam, a melt or a solid material, preferable a polymer.

It is preferred that the formed nanofibers are deposited on a paper or board substrate. The particles can, e.g., be applied to a moving web of paper or paperboard during the paper making process. The method of the invention can thus be used for e.g. coating or sizing of paper or board. The method may be used to incorporate various types of polymer fibers, directly onto or incorporated into the surface of paper or board.

The electrostatic particle formation of the present invention may be carried out by means of a conventional apparatus suitable for electrospinning. The apparatus may comprise a collector, a feed section and a voltage source adapted to provide an electrical potential difference between the collector and the feed section. The collector may be a metal plate for supporting the substrate, although a plate, a roll, a belt, a drum, a cylinder or the like also may be possible to use. The electrostatic voltage is preferably between 10 and 100 kV, more preferably between 40 and 60 kV, and the distance between the medium and the substrate is preferably between 10 and 300 mm, more preferably about 50 mm.

The electrospinning of the particles can be conducted using both direct and/or alternating voltages. In one embodiment of the invention, the electrostatic processing is performed in the presence of an alternating current (AC) electric field. This can be achieved by applying an alternating electrical potential to either of the electrodes forming the electric field, e.g. an alternating electrical potential can be applied either to the feed section or to the collector. The use of AC potentials gives rise to an improved coverage of the deposited surface by the formed particles.

The electrospinning may also be performed using both alternating current and direct current simultaneously. In this way, the form of the particles produced in the process may be varied. According to one embodiment, an alternating electrical potential is applied to the collector and a direct electrical potential is applied to the feed section, whereby particles in the form of quite large fibers may be produced. In another embodiment, an alternating electrical potential is applied to the feed section and a direct electrical potential is applied to the collector, whereby more fine particles may be produced.

The feed section of the apparatus suitable may, e.g. be an opening, one or a amber of nozzles or it is also possible to spin from an open surface, i.e. a free flowing liquid surface of roll.

### Experimental

The invention is further described with reference to some examples below. It is to be understood that the invention is not limited to the particular process steps and materials disclosed herein. The results are shown in the attached figures.

### Brief description of the figures:

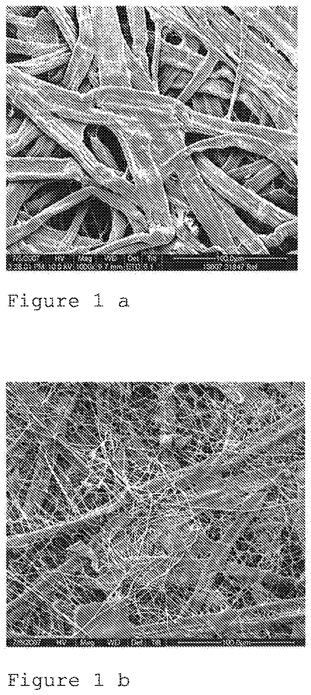

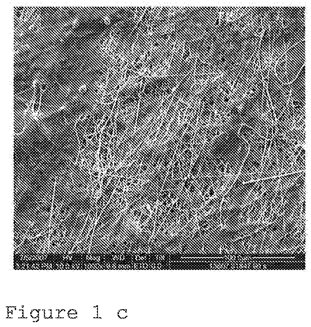

Figure 1 a) shows an uncoated paperboard used as a reference.
Figure 1 b) shows an e-spun paperboard coated with 0,3 g/m².
Figure 1 c) shows an e-spun paperboard coated with 1.2 g/m².
Figure 2 a) shows an e-spun paperboard with a coat weight (dry) of 1,2 g/m² and heated in the oven at 550°C for 1 s.

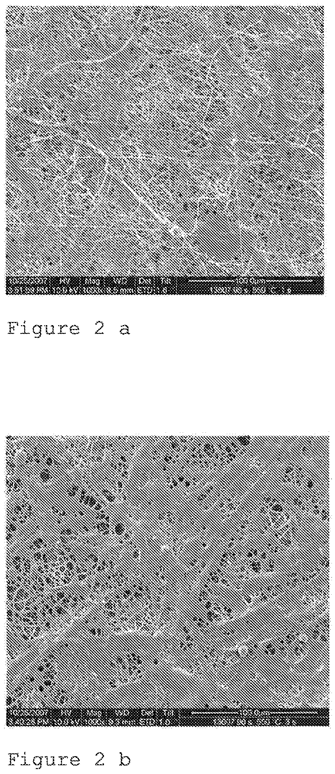

Figure 2 b) shows an e-spun paperboard with a coat weight (dry) of 1,2g/m2 and treated in the oven at 550°C for 3 s.

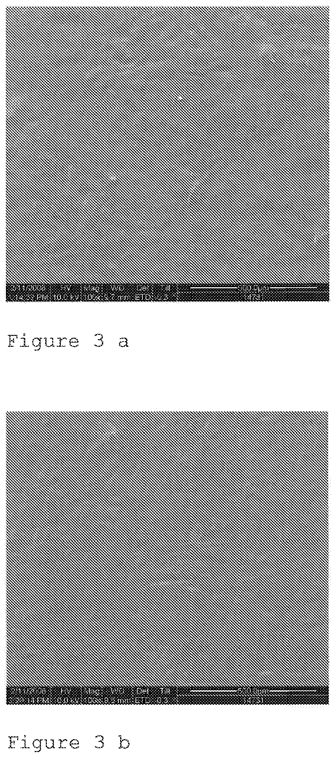

Figure 3 a) shows a paperboard with a coating with electrospinning using Cartaseal VGL after post heating.
Figure 3 b) coating with electrospinning using Cartaseal FTU after post heating.

### Example 1

Nanofibers produced by the use of electrospinning were deposited on an uncoated paperboard sample. The polymer used was polyvinyl alcohol and the concentration of the e-spun solution was slightly less than 10% by weight, whereas the deposited fibers have high solid content due to evaporation occurring during transfer between nozzle and substrate.

The pictures attached have been taken with a Scanning Electron Microscope (SEM) and figure 1a shows a picture of an uncoated paperboard used as a reference. The fibers and the pores between fibers are evident from this picture.

In figures 1b and 1c, the weights of the deposited nanofibers are gradually increased which can be seen as higher amount of nanofibers but also that the local fiber-fiber coalescence of the nanofibers starts.

The even spots shown in Figure 1c indicate that a film has been formed. These spots were obtained by changing the electrospinning conditions so that the deposited nanofibers were partly wet, i.e. semidry, and hence coalesced into a film. Thus, no external heating was applied in this case to get the film formation.

### Example 2

Two paperboard samples which have been coated with e-spun nanofibers to a dry weight of 1.2 g/m2 as described in example 1 were post treated by heating. By heat-treating the deposited e-spun fibers it is possible to melt the deposited fibers in order to create a film. The coat weights in this case were quite low but it still gave an almost complete coverage of the paperboard which demonstrates the advantages of the present invention.

The paperboard samples were treated in an oven at 550°C for 1s and 3s, respectively. Figure 2a and 2b demonstrates the effect of post heating of the spun coated samples.

### Example 3

Commercial barrier chemicals (Cartaseal, Clariant) were tested and applied onto paperboard using the said deposition or coating method as described above. In this case, the flow properties were adjusted with polyethylene oxide.

Recipe was:
- 2000 g Cartaseal VGTL respectively FTU of 10% solids
- 200 g polyethylene oxide 600 000 of 6%

Hence, e-spun fibers were created onto the substrate. In this particularly case, a rough substrate was used and the targeted dry coat weight was 10 g/m². The paperboard was thereafter dried at 115°C for 10 minutes and SEM images were captured on the spun coated paperboard.

Results shown in Figure 3a and Figure 3b demonstrate that full coverage was obtained and that no pinholes exists.

Table I demonstrates the results from the fat/grease resistance tests according to a modified ASTM F 119-82 standard test procedure which includes testes for specified chemicals at given temperature (40 °G).

**Table I**

| Chemical | Grease resistance through board, Show trough time | Grease resistance through board to the TLC plate, Break-through time |
|---|---|---|
| Cartaseal VGL | > 52 h | > 52 h |
| Cartaseal FTU | > 52 h | > 52 h |

## Claims

1. A method for providing a surface of a fiber based substrate with a barrier layer which barrier layer is formed as a film by depositing nanofibers on the surface by the use of electrospinning or meltspinning wherein the film is formed by post treating the substrate after the depositing of nanofibers on the surface.

2. The method according to claim 1, wherein said post treatment is done by increasing the temperature so that the deposited nanofibers form a film.

3. The method according to claim 2 wherein the temperature is increased to or above the glass transition temperature or melting temperature of the deposited nanofibers so that a film is formed.

4. The method according to any of the preceding claims wherein at least two components are spun simultaneously in order to deposit nanofibers of the components to the surface of the substrate in a single step.

5. The method according to any of the preceding claims wherein the barrier layer comprises at least two layers.

6. The method according to any one of the preceding claims, wherein the barrier layer has a dry weight of 0.1-20 g/m2, preferably between 0.1-5 g/m2 or even more preferably 0.2-3 g/m2.

7. The method according to any of the preceding claims, wherein the surface of the fiber based substrate is provided with a coating layer before the nanofibers are deposited on the surface.

8. The method according to any of the preceding claims, wherein the barrier layer is provided with a coating layer.

9. The method according to any of the preceding claims wherein the nanofibers are formed by electrospinning or meltspinning a polymer, preferably polyvinyl alcohol, varnish, polystyrene, polybutadiene, polyurethanes, polyethylene dispersions, polypropylene, PLA, chitosan, starch, sodium carboxymethyl cellulose, acrylate copolymers, polyvinyl acetate, poly methylene oxide, polyethylene dispersions, polyethylene terephthalate dispersions, mixtures or its modified analogues of any of the mentioned components.

10. The method according to claim 9 wherein the electrospinning is done with a liquid or dispersion comprising the polymer.

11. The method according to any of the preceding claims wherein the barrier layer further is provided with a functional property by addition of a functional additive.

12. The method according to claim 11 wherein the functional additive is spun together with the polymer.

13. The method according to claim 11 wherein the functional additive is spun as a separate layer of the barrier layers.

14. A fiber based substrate which comprises a fiber base layer and a barrier layer wherein the barrier layer is a film formed by electrospun or meltspun nanofibers that have been deposited on the surface of the fiber base layer wherein the film has been formed by post treatment of the deposited nanofibers.

15. The fiber bases substrate according to claim 14 wherein the deposited nanofibers has been melted to form said film.

16. The fiber based substrate according to any of claims 14-15 wherein the film is continuous.

17. The fiber based substrate according to any of claims 14-15, wherein the film is discontinuous.

18. The fiber based substrate according to any of claims 14-17 wherein the barrier is a barrier against liquid, vapour, oil, solvents, heat, uv-light, aroma and/or gas.

19. The fiber based substrate according to claim 17 wherein the barrier is a barrier against oil, grease and/or fat.

20. The fiber based substrate according to any of claims 14-19 wherein the barrier layer comprises at least two components.

21. The fiber based substrate according to any of claims 14-20 wherein the barrier layer comprises at least two layers.

22. The fiber based substrate according to any of the claims 14-21 wherein the fiber base layer is coated and the barrier layer has been formed on the coated surface of the fiber base layer.

23. The fiber based substrate according to any of the claims 14-22 wherein the barrier layer is coated.

## Patentansprüche

1. Verfahren zum Versehen einer Oberfläche eines Substrats auf Faserbasis mit einer Sperrschicht, wobei die Sperrschicht durch Abscheiden von Nanofasern unter Verwendung von Elektrospinnen oder Schmelzspinnen auf der Oberfläche als Film gebildet wird, wobei der Film durch Nachbehandeln des Substrats nach dem Abscheiden von Nanofasern auf der Oberfläche gebildet wird.

2. Verfahren nach Anspruch 1, wobei die Nachbehandlung durch Erhöhen der Temperatur erfolgt, sodass die abgeschiedenen Nanofasern einen Film bilden.

3. Verfahren nach Anspruch 2, wobei die Temperatur auf oder über die Glasübergangstemperatur oder Schmelztemperatur der abgeschiedenen Nanofasern erhöht wird, sodass ein Film gebildet wird.

4. Verfahren nach einem der vorhergehenden Ansprüche, wobei mindestens zwei Komponenten gleichzeitig gesponnen werden, um Nanofasern der Komponenten auf der Oberfläche des Substrats in einem einzigen Schritt abzuscheiden.

5. Verfahren nach einem der vorhergehenden Ansprüche, wobei die Sperrschicht mindestens zwei Schichten umfasst.

6. Verfahren nach einem der vorhergehenden Ansprüche, wobei die Sperrschicht ein Trockengewicht von 0,1 bis 20 g/m2, vorzugsweise von 0,1 bis 5 g/m2 oder sogar noch bevorzugter von 0,2 bis 3 g/m2 aufweist.

7. Verfahren nach einem der vorhergehenden Ansprüche, wobei die Oberfläche des Substrats auf Faserbasis mit einer Beschichtungsschicht versehen wird, bevor die Nanofasern auf der Oberfläche abgeschieden werden.

8. Verfahren nach einem der vorhergehenden Ansprüche, wobei die Sperrschicht mit einer Beschichtungsschicht versehen wird.

9. Verfahren nach einem der vorhergehenden Ansprüche, wobei die Nanofasern durch Elektrospinnen oder Schmelzspinnen eines Polymers, vorzugsweise Polyvinylalkohol, Lack, Polystyrol, Polybutadien, Polyurethane, Polyethylendispersionen, Polypropylen, PLA, Chitosan, Stärke, Natriumcarboxymethylcellulose, Acrylat-Copolymere, Polyvinylacetat, Polyethylenoxid, Polyethylendispersionen, Polyethylenterephthalatdispersionen, Mischungen oder modifizierte Analoga irgendeiner der erwähnten Komponenten, gebildet werden.

10. Verfahren nach Anspruch 9, wobei das Elektrospinnen mit einer Flüssigkeit oder Dispersion durchgeführt wird, die das Polymer umfasst.

11. Verfahren nach einem der vorhergehenden Ansprüche, wobei die Sperrschicht durch Zugeben eines funktionellen Zusatzes ferner mit einer funktionellen Eigenschaft versehen wird.

12. Verfahren nach Anspruch 11, wobei der funktionelle Zusatz zusammen mit dem Polymer gesponnen wird.

13. Verfahren nach Anspruch 11, wobei der funktionelle Zusatz als eine separate Schicht der Sperrschichten gesponnen wird.

14. Substrat auf Faserbasis, das eine Fasergrundschicht und eine Sperrschicht umfasst, wobei die Sperrschicht ein Film ist, der durch elektrogesponnene oder schmelzgesponnene Nanofasern gebildet ist, die auf der Oberfläche der Fasergrundschicht abgeschieden wurden, wobei der Film durch Nachbehandlung der abgeschiedenen Nanofasern gebildet wurde.

15. Substrat auf Faserbasis nach Anspruch 14, wobei die abgeschiedenen Nanofasern geschmolzen wurden, um den Film zu bilden.

16. Substrat auf Faserbasis nach einem von Anspruch 14 und 15, wobei der Film kontinuierlich ist.

17. Substrat auf Faserbasis nach einem von Anspruch 14 und 15, wobei der Film diskontinuierlich ist.

18. Substrat auf Faserbasis nach einem von Anspruch 14 bis 17, wobei die Sperre eine Sperre gegen Flüssigkeit, Dampf, Öl, Lösungsmittel, Wärme, UV-Licht, Aroma und/oder Gas ist.

19. Substrat auf Faserbasis nach Anspruch 17, wobei die Sperre eine Sperre gegen Öl, Schmierfett und/oder Fett ist.

20. Substrat auf Faserbasis nach einem von Anspruch 14 bis 19, wobei die Sperrschicht mindestens zwei Komponenten umfasst.

21. Substrat auf Faserbasis nach einem von Anspruch 14 bis 20, wobei die Sperrschicht mindestens zwei Schichten umfasst.

22. Substrat auf Faserbasis nach einem von Anspruch 14 bis 21, wobei die Fasergrundschicht beschichtet ist und die Sperrschicht auf der beschichteten Oberfläche der Fasergrundschicht gebildet wurde.

23. Substrat auf Faserbasis nach einem von Anspruch 14 bis 22, wobei die Sperrschicht beschichtet ist.

## Revendications

1. Procédé pour fournir une surface d'un substrat à base de fibres avec une couche de barrière, laquelle couche de barrière est conçue sous la forme d'un film en déposant des nanofibres sur la surface par l'utilisation de l'électrofilage ou du filage par fusion, où le film est formé par un post-traitement du substrat après le dépôt de nanofibres sur la surface.

2. Procédé selon la revendication 1, dans lequel ledit post-traitement est réalisé en augmentant la température de sorte que les nanofibres déposées forment un film.

3. Procédé selon la revendication 2, dans lequel la température est augmentée jusqu'à ou au-dessus de la température de transition vitreuse ou de la température de fusion des nanofibres déposées de sorte qu'un film est formé.

4. Procédé selon l'une quelconque des revendications précédentes, dans lequel au moins deux composants sont filés simultanément afin de déposer des nanofibres des composants à la surface du substrat en une seule étape.

5. Procédé selon l'une quelconque des revendications précédentes, dans lequel la couche de barrière comprend au moins deux couches.

6. Procédé selon l'une quelconque des revendications précédentes, dans lequel la couche de barrière a un poids à sec de 0,1 à 20 g/m2, de préférence entre 0,1 et 5 g/m2 ou même plus préférablement de 0,2 à 3 g/m2.

7. Procédé selon l'une quelconque des revendications précédentes, dans lequel la surface du substrat à base de fibres est pourvue d'une couche de revêtement avant que les nanofibres ne soient déposées sur la surface.

8. Procédé selon l'une quelconque des revendications précédentes, dans lequel la couche de barrière est pourvue d'une couche de revêtement.

9. Procédé selon l'une quelconque des revendications précédentes, dans lequel les nanofibres sont formées par électrofilage ou par filage par fusion d'un polymère, de préférence de l'alcool polyvinylique, un vernis, du polystyrène, du polybutadiène, des polyuréthanes, des dispersions de polyéthylène, du polypropylène, de l'acide polylactique (PLA), du chitosane, de l'amidon, du carboxyméthyl cellulose de sodium, des copolymères d'acrylates, de l'acétate de polyvinyle, de l'oxyde de polyéthylène, des dispersions de polyéthylène, des dispersion de téréphtalate de polyéthylène, des mélanges ou des analogues modifiés de l'un quelconque des composants mentionnés.

10. Procédé selon la revendication 9, dans lequel l'électrofilage est réalisé avec un liquide ou une dispersion comprenant le polymère.

11. Procédé selon l'une quelconque des revendications précédentes, dans lequel la couche de barrière est en outre pourvue d'une propriété fonctionnelle par l'addition d'un additif fonctionnel.

12. Procédé selon la revendication 11, dans lequel l'additif fonctionnel est filé ensemble avec le polymère.

13. Procédé selon la revendication 11, dans lequel l'additif fonctionnel est filé sous la forme d'une couche séparée des couches de barrière.

14. Substrat à base de fibres qui comprend a couche à base de fibres et une couche de barrière, où la couche de barrière est un film formé par électrofilage ou par filage par fusion de nanofibres qui ont été déposées sur la surface de la couche à base de fibres, où le film a été formé par un post-traitement des nanofibres déposées.

15. Substrat à base de fibres selon la revendication 14, dans lequel les nanofibres déposées ont été fondues pour former ledit film.

16. Substrat à base de fibres selon l'une quelconque des revendications 14 à 15, dans lequel le film est continu.

17. Substrat à base de fibres selon l'une quelconque des revendications 14 à 15, dans lequel le film est discontinu.

18. Substrat à base de fibres selon l'une quelconque des revendications 14 à 17, dans lequel la barrière est une barrière contre les liquides, la vapeur, l'huile, les solvants, la chaleur, la lumière uv, les arômes et/ou les gaz.

19. Substrat à base de fibres selon la revendication 17, dans lequel la barrière est une barrière contre l'huile, la graisse et/ou la matière grasse.

20. Substrat à base de fibres selon l'une quelconque des revendications 14 à 19, dans lequel la couche de barrière comprend au moins deux composants.

21. Substrat à base de fibres selon l'une quelconque des revendications 14 à 20, dans lequel la couche de barrière comprend au moins deux couches.

22. Substrat à base de fibres selon l'une quelconque des revendications 14 à 21, dans lequel la couche à base de fibres est revêtue et la couche de barrière a été formée sur la surface revêtue de la couche à base de fibres.

23. Substrat à base de fibres selon l'une quelconque des revendications 14 à 22, dans lequel la couche de barrière est revêtue.
